# EUROPEAN PATENT APPLICATION

(11) **EP 1 536 428 A1**
(43) Date of publication of application: **01.06.2005**
(21) Application number: 04021247.4
(22) Date of filing: 07.09.2004
(51) Int. Cl.: G11B 27/19, G11B 27/24

(54) **Synchronizing method and synchronizing apparatus**

(30) Priority: 28.11.2003 JP 2003400893
(71) Applicant: Kabushiki Kaisha Toshiba, Tokyo 105-8001 (JP)
(72) Inventor: Kojima, Tadashi, c/o Intel. Property Division, Tokyo 105-8001 (JP); Yoshioka, You, c/o Intel. Property Division, Tokyo 105-8001 (JP)
(74) Representative: Henkel, Feiler & Hänzel

(57) **Abstract**

A WDU is defined as a unit composed of a carrier of N cycles which carrier contains data depending on whether or not modulation is executed. A WPA is defined as a unit composed of a set of M of the WDUs. When the WPAs are consecutively inputted, each WDU and each WPA are detected. Further, an N period counter (R4) and an M period counter (R5) are used to obtain timing control signals for sampling the data. Then, WDU detecting means (R10) obtains a WDU synchronization detection signal PB-WDU indicative of a division point between the WDUs. WPA detecting means obtains a WPA synchronization detection signal PB-SYNC. The WDU synchronization detection signal is used to initialize the N period counter (R4) to a set value. The WPA synchronization detection signal is used to initialize the M period counter (R5) to a set value.

## Description

The preset invention relates to a synchronizing method and apparatus that is effective in obtaining synchronizing signals for signals detected from, for example, an optical disk.

Information recording and reproducing systems using an optical disk as a recording medium have been popularized through the spread of CD-R disk- and CD-RW disk-based systems. Further, in recent years, for example, DVD-R, DVD-RW, and DVD-RAM media, based on the DVD system, have been commercialized. With an increase in their storage capacities, these media have been rapidly diffused. The popularization of video recorders using a DVD recording medium are assumed to be a result of the recognition of their functions meeting users' demands; such as easier editing, faster retrieval, and improved image quality based on digitalization.

If digital information is recorded in a recording medium, a recording apparatus first reads physical addresses embedded in a recording track. The recording apparatus then sequentially records packetized recording information at recording positions in accordance with a certain rule while referencing the physical addresses.

A system that embeds physical addresses in a recording medium embeds address data or the like by subjecting recording tracks to wobble modulation. This embedding system embeds address data in recording tracks using a particular period. Accordingly, the apparatus requires an internal period counter to acquire the address data, understand its contents, and control read positions. It is also necessary to synchronize the operation of the period counter with a particular position of the address data.

To achieve this period synchronization, synchronizing signals are embedded in the recording tracks at a particular period together with the address data and the like. Even if the period counter is synchronized with the address data on the basis of the synchronizing signals, the wobble modulation method or the like may undergo the crosstalk between adjacent tracks, various defects, variations in characteristics among recording media, or the like. Consequently, data read timings have often been erroneous. Thus, a method of synchronizing the period counter is important because it determines the capability of reading address data or the like, which is essential information for determining recording positions.

In general, a method of controlling timings for data streams with a period characteristic and synchronizing the data streams comprises generating timing control signals using the period counter as a main component. In this case, the period counter is synchronized (initialized to a particular value) using a reproduction synchronizing signal detected from an input signal. However, a false synchronizing signal may be detected as the reproduction synchronizing signal, resulting in erroneous timing control. In view of such a problem, a system has been introduced which synchronizes the period counter using a function to determine whether or not a detected reproduction synchronizing signal is real.

[Patent Document 1] Jpn. Pat. Appln. KOKAI Publication No. 2000-163766

However, the conventional synchronizing apparatuses and methods are insufficiently reliable and are desired to be further improved. In particular, there is a demand for the improvement of accuracy of apparatuses used to detect physical addresses in a recording medium. This is due to the increased density of recording media, leading to the increased possibility of reproducing a false synchronizing signal. For example, if the recording medium has a defect at a regular synchronizing signal position and a false synchronizing signal is generated at an offset position, permanent synchronization with the false synchronizing signal may occur.

It is thus an object of the present invention to provide a synchronizing method and apparatus which enables a period counter to be reliably synchronized with read information.

According to embodiments of the present invention provides an apparatus which reproduces control data, wherein a carrier of N cycles is composed of transmission units, a transmission block is composed of M sets of transmission units, some of the particular transmission units constituting the transmission block are composed of a block synchronizing signal and a section containing modulated distributed control data, and if transmission blocks are consecutively transmitted, the apparatus comprising:
main period counter generating timing signals used to separate and read demodulated control data, the main period counter comprising an N period counter and an M period counter which are connected together;
transmission unit detector utilizing the fact that the transmission unit has a modulated area in a leading part and a non-modulated area in a latter half, to detect a transmission unit division point and to obtain a unit detection signal, on the basis of a pattern of the modulated and non-modulated areas of a plurality of transmission units;
block synchronization detector detecting a block synchronizing signal from a transmission unit located at a leading end of the transmission block and modulated by the block synchronizing signal;
initialize circuit initializing the N period counter to a set value using the unit detection signal and initializing the M period counter to a set value using the block synchronization signal; and
extracting circuit extracting the control data on the basis of the timing signals from the main period counter.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram illustrating the relationship among signals obtained if recording tracks are subjected to a wobble modulation as an method of addressing an optical disk;
FIG. 2 is a chart showing the layout of physical address information;
FIGS. 3A and 3B are diagrams illustrating a modulation rule in accordance with which information is embedded using the wobble modulation;
FIG. 4 is a diagram illustrating the data structure of physical addresses;
FIG. 5 is a diagram showing an example of a synchronizing apparatus used to read physical address data;
FIG. 6 is a flow chart illustrating an example of operations of the synchronizing apparatus in FIG. 5;
FIG. 7 is a diagram illustrating an example in which the apparatus in FIG. 5 is out of step;
FIG. 8 is a diagram showing an example of the configuration of a phase detecting and demodulating circuit in FIG. 5;
FIG. 9 is a signal waveform diagram illustrating operations of the phase detecting and demodulating circuit in FIG. 8;
FIG. 10 is a signal waveform diagram illustrating another example of operations of the phase detecting and demodulating circuit in FIG. 8;
FIG. 11 is a diagram showing an example of an improved synchronizing apparatus used to read physical address data;
FIG. 12 is a flow chart illustrating an example of operations of the synchronizing apparatus in FIG. 11;
FIG. 13 is a diagram showing an example of an improved synchronizing apparatus used to read physical address data;
FIG. 14 is a flow chart illustrating an example of operations of the synchronizing apparatus in FIG. 13;
FIG. 15 is a signal waveform diagram illustrating an example of operations of the apparatus in FIG. 13;
FIG. 16 is a signal waveform diagram illustrating another example of operations of the apparatus in FIG. 13;
FIG. 17 is a diagram showing an example of an improved synchronizing apparatus used to read physical address data;
FIG. 18 is a flow chart illustrating an example of operations of the synchronizing apparatus in FIG. 17; and
FIG. 19 is a chart of an example of a WDU detection pattern illustrating another embodiment of the present invention.

Embodiments of the present invention will be described below with reference to the drawings.

Before describing specific examples of the present invention, description will be given of a technique that is essential to the present invention. An optical disk normally has spirally formed recording tracks. Each of the recording tracks is divided into physical segments each having a predetermined length. Each of the physical segments is provided with an address. The address is written in the corresponding physical segment as preformat data.

An optical disk employing a CLV system having a constant recording line density uses a uniform physical segment length. An excessively long physical segment increases the time required to search for address information during a random access. Accordingly, the physical segment length is selected so that one round corresponds to 10 to several dozen physical segments.

A preformatting method comprises forming wobble signals in data recording tracks which signals are based on meandering of grooves, and using the wobble signals to express format information. If format information is recorded using wobble signals, the signals are subjected to a modulation such as a phase inversion or a frequency change.

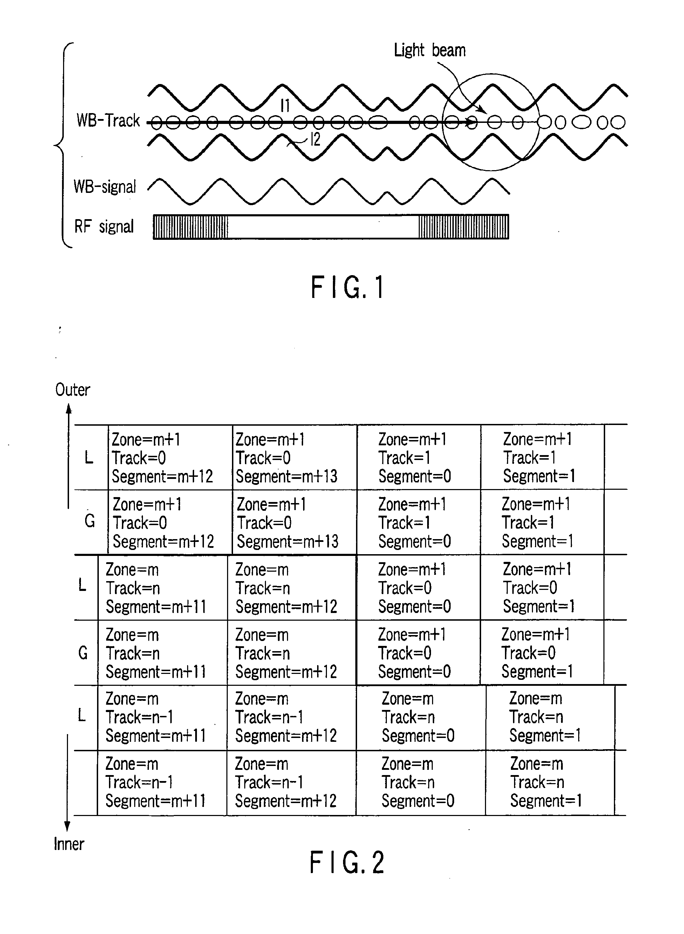

FIG. 1 is a diagram illustrating an example in which recording tracks are subjected to a wobble modulation in order to address an optical disk recording medium. FIG. 1 shows the relationship among signals during the wobble modulation. Digital data is reproduced from (or recorded in) the meandering recording tracks. On this occasion, the recorded data are recorded at specified positions. Physical address information determining the specified positions is obtained by reading and demodulating the wobble signals from the recording tracks.

FIG. 1 shows the relationship between a read beam L-beam on a track WB-track, a detected wobble signal WB-signal, and a high frequency signal RF-signal for read digital data.

FIG. 2 is a chart showing the layout of physical address information for a structure in which both lands and grooves of each recording track in an optical disc recording medium are used.

Addressing based on the wobble modulation is executed on groove tracks. However, if information is recorded in or reproduced from land tracks, the correct addressing must be established. Thus, an addressing structure called a zone system is employed. An optical disk recording medium is divided into a plurality of zones in a radial direction. In each zone, the recording capacity constitutes a specified segment packet. A "zone number", a "track number", and a "segment number", which are physical address information, are embedded in each zone by subjecting the groove tracks to the wobble modulation. When one zone changes to another zone, a division angle (the division angle of the periphery of the disk as viewed from its center) with which the segments within the zone are formed is changed so that the segments have a substantially equal recording density. The recording capacity is thus optimized. With the configuration shown in FIG. 2, even with the land/groove system, address information in groove wobble signals from adjacent tracks has the same values except for the track number Physical address information can also be read from the land tracks. By arranging track numbers for the lands and for the grooves, it is possible to obtain information from both lands and grooves. Consequently, no problems occur.

The optical disk is divided into a number of zones Z0, Z1, ···. The recording tracks within the same zone has physical segments aligned with one another in the radial direction.

FIG. 2 shows an example of arrangement of physical segments in the vicinity of a zone boundary (between a zone m and a zone m+1). In this example, a lead-in area, data area, and lead-out area of an optical disk are each composed of a zone, a plurality of tracks, and a plurality of physical segments. "L" denotes a land, and "G" denotes a groove. A physical segment is identified by a zone number, a track number, and a segment number. Each zone contains segments with the same physical segment number. In each zone, the angular distance between the first channel bits of physical segments in adjacent tracks is preferably shorter than ±4 channel bits. The angular distance is a spread angle observed when the radially outer periphery of the disk is viewed from its center. The physical segment number at the start position of a track is zero and is located at the boundary between zones. In each lead-in area, each data area, and each lead-out area, the angular distance between the first channel bits of physical segments at two track start positions is at most ±256 channel bits. The address of a land track adjacent to a zone boundary cannot be read.

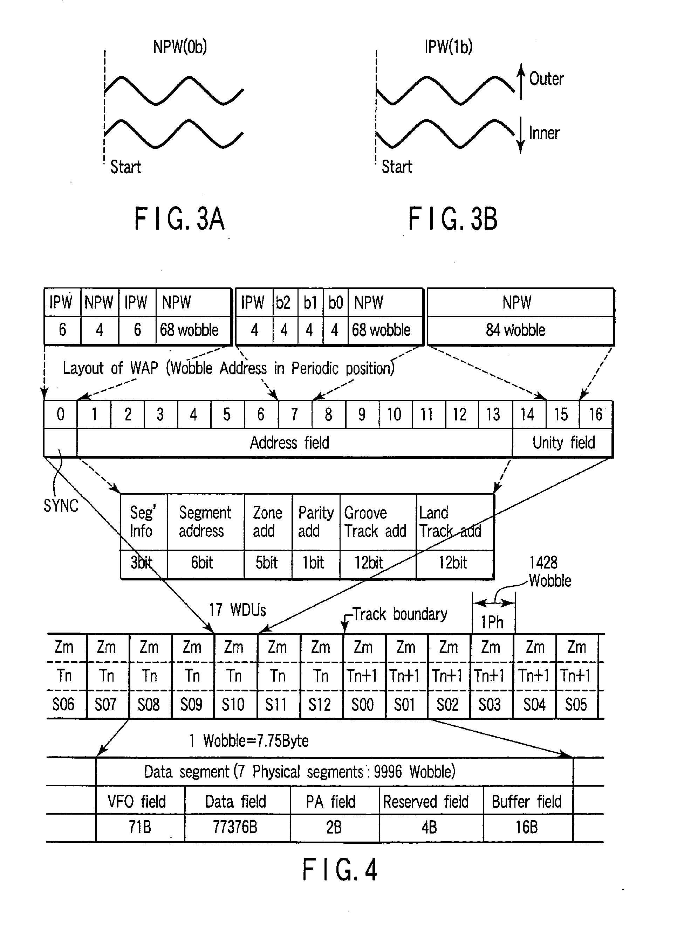

FIGS. 3A and 3B are diagrams showing a modulation rule used if information is embedded by the wobble modulation. A sine wave or non-modulated wave (NPW) of a wobble signal is utilized as the bit information "0". An inverted wave or modulated wave (IPW) of the wobble signal is utilized as the bit information "1". This linkage rule is also used to configure synchronizing signals.

FIG. 4 is a diagram of the entire data structure of physical addresses, showing the relationship among the physical addresses. Before describing physical addresses, description will be given of various terms.

Wobbles are formed by meandering grooves. A wobble modulated portion is obtained by changing the phase of wobbles in accordance with data and has a meaning as data. In this case, one bit of data is expressed by 4 wobbles (4 cycles).

A WDU (Wobble Data Unit) is a unit used to express information by the wobble modulation and is referred to as a transmission unit herein. The total number of wobbles in the WDU is 84. A WPA (Wobble Address in Periodic position) is a unit composed of a set of M (=17) WDUs and is referred to as, for example, a transmission block herein. The WPA is composed of a synchronizing section (SYNC), an address field, and a unity field. The synchronizing section (SYNC) is composed of one WDU. The address field contains 13 WDUs. The unity field is composed of three WDUs.

The WDUs constituting the synchronizing section (SYNC) have a fixed form in which an IPW of 6 wobbles, an NPW of 4 wobbles, an IPW of 6 wobbles, and an NPW of 68 wobbles are arranged in this order. A WDU in the address field is composed of an IPW of 4 wobbles, "b2" of 2 wobbles, "b1" of 4 wobbles, "b0" of 4 wobbles, and an NPW of 68 wobbles arranged in this order. Accordingly, a WDU in the address field contains 3 bits of information (b2, b1, and b0) as variable contents. The unity field is composed only of an NPW of 84 wobbles. The IPW placed at the leading end of the WDU is a wobble data unit synchronizing signal.

Physical address data indicating the position of a physical segment is composed of 39 bits including "3 bits of segment information", "6 bits of segment address", "5 bits of zone address", "1 bit of parity address", "12 bits of groove address", and "12 bits of land address". These 39 bits are divided into groups of 3 bits each. The groups of bits are distributed among the WDUs, in which the bits are embedded by a modulating process. Therefore, the bits are distributed among the 13 WDUs constituting the address field (3 × 13 = 39).

The WPAs are connected together to form track wobbles. Accordingly, a period determined by the unit of WPAs (the unit of transmission blocks) is equal to a period with which physical address data is embedded. Moreover, at least 4 wobbles at the leading end of each WDU having data are configured as an IPW (wobble data unit synchronizing signal). This facilitates the identification of the leading end of the WDU. As a result, in each WDU, 68 wobbles following the embedded address information are defined as an NPW. As described above, in the WPA, the whole physical address data is composed of 39 bits. Therefore, the address field requires 13 WDUs. A block synchronizing signal is placed in the leading WDU of the WPA. The trailing three units constitute a non-modulated unit (unity field).

That is, a plurality.of transmission blocks (WPAs) are defined each of which is formed of a plurality of transmission units (WDUs) each containing a data modulated wave.

The transmission unit (WDU) contains a carrier of N cycles. In a unit leading part, the carrier is a fixed modulated wave, in a unit trailing part, the carrier is a non-modulated wave, and between the unit leading part and the unit trailing part, the carrier is a data modulated wave. The transmission block (WPA) contains M transmission units. The transmission unit at the leading end of the transmission block is defined as a synchronizing section. A predetermined number of transmission units in the trailing part of the block are all defined as a unity field containing a non-modulated wave. The plurality of transmission units between the block trailing part and the block leading end are defined as an address field containing a data modulated wave.

Then, information containing video data, management data, or the like is recorded in recording tracks such as groove or land tracks, described above.

In this case, the recorded data is composed of 77,376 bytes of data, leading 71 bytes of VFO (a fixed frequency signal that facilitates the generation of a data modulation channel clock during a reproducing operation), followed by a "post amble (PA) field" used to connect data blocks together, a "reserved field", and a "buffer field"; the trailing three fields are composed of 22 bytes in total. A total of 77,469 bytes are recorded in 7 physical segments (9,996 wobbles).

In accordance with the above rule, the user data is recorded in the area specified by the address data in the physical segments. Thus, the reading of the address data from the physical segments is important.

If the physical addresses configured as described above are read from the recording medium in which the physical addresses are recorded, synchronizing signals are detected from wobble signals to synchronize a period counter for WPAs (transmission blocks) with the transmission block. An output from the period counter is utilized to generate timing signals. The timing signals are then used to extract sample signals from the wobble signals. The sample signals are then demodulated to obtain address information.

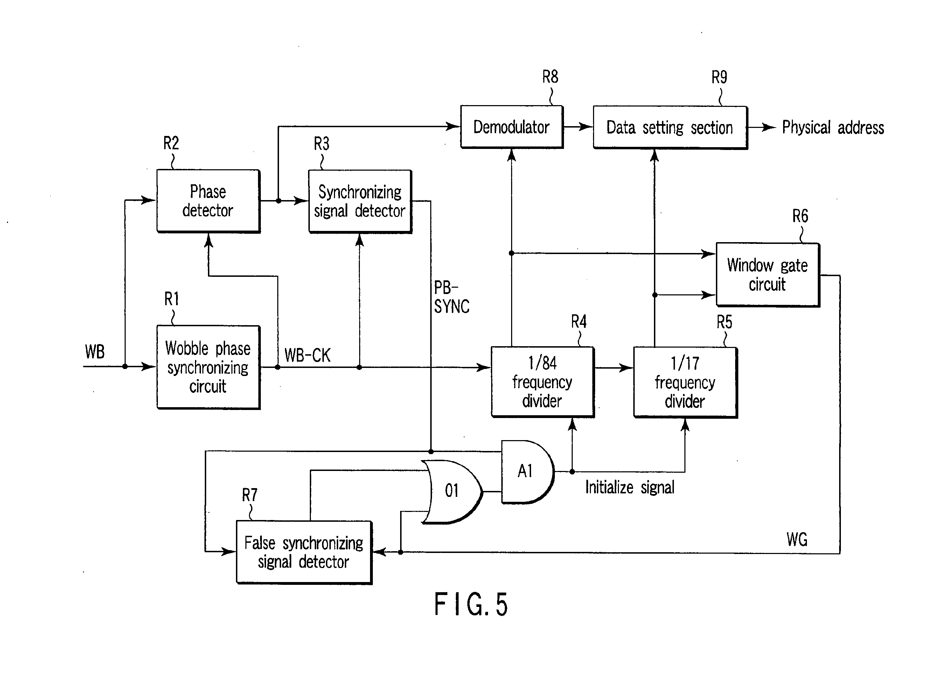

FIG. 5 is a diagram showing an example of the configuration of a timing control circuit using a method of synchronizing the period counter. First, operations of this circuit will be described in brief. A wobble signal WB-signal read from the recording medium is sent to a wobble phase synchronizing circuit R1 that generates a clock used to read and demodulate address data. The wobble phase synchronizing circuit R1 generates an output clock WB-CK. This clock actually gradually increases the frequency of the wobble signal so that the frequency increased clock signal becomes the channel bit clock frequency of a data recording signal for data recording. However, the clock divides the frequency of the signal again. That is, the clock is used for the wobble frequency or to read address data.

The output clock WB-CK from the wobble phase synchronizing circuit R1 is assumed to be a clock for the wobble frequency. The wobble signal WB-signal is further sent to a phase detector R2 that distinguishes an NPW from an IPW. In this case, the output clock from the wobble phase synchronizing circuit R1 is utilized to determine whether the wobble signal WB-signal is an NPW or an IPW. A signal for a result of phase determination from the phase detector R2 is sent to a synchronizing signal detector R3 and a demodulator R8. The synchronizing signal detector R3 detects the synchronizing signal (SYNC), described in FIG. 4. The demodulator R8 demodulates bit data.

On the other hand, the output clock WB-CK, from the wobble phase synchronizing circuit R1 is sent to a frequency divider R4 that divides a frequency into 84 pieces. A frequency division output from the frequency divider R4 is inputted to a frequency divider R5 that divides each frequency into 17 pieces. The frequency dividers R4 and R5 constitute a period counter circuit. The period counter circuit is initialized (synchronized) by synchronizing with a WPA synchronization detection signal PB-SYNC detected by the synchronizing signal detector R3.

However, the WPA synchronization detection signal PB-SYNC can be considered to be a result of detection of a false synchronizing signal (NSYNC). Thus, the WPA synchronization detection signal PB-SYNC performs an initializing operation, without directly synchronizing the periodic counter circuit, only when the WPA synchronization detection signal PB-SYNC is detected within a gate pulse WG from a window gate circuit R6 utilizing an output from the period counter circuit. However, when the correct synchronizing signal is detected in a period different from that of the gate pulse WG, the period counter circuit is permanently not synchronized. Thus, to avoid this situation, a false synchronizing signal detector R7 checks the number of times the WPA synchronization detection signal PB-SYNC has consecutively failed to be detected within the gate pulse WG. If the WPA synchronization detection signal PB-SYNC has failed to be detected within the gate pulse WG a specified number of times, an AND circuit A1 is controlled via an OR circuit 01 to establish an open state. This allows the WPA synchronization detection signal PB-SYNC from the signal detecting circuit R3 to be outputted through the AND circuit A1. Consequently, the frequency dividers R4 and R5 are forcedly initialized for synchronization.

Once this process has achieved synchronization, the false synchronizing signal NSYNC is excluded on the basis of a time correlation characteristic using the periodicity of the WPA synchronization detection signal PB-SYNC. The period counter circuit, composed of the thus synchronized frequency dividers R4 and R5, creates a timing control signal. The demodulator R8 and a data setting section R9 read the data "segment information", "segment address", "zone address", "parity address", "groove address", and "land address", shown in FIG. 4.

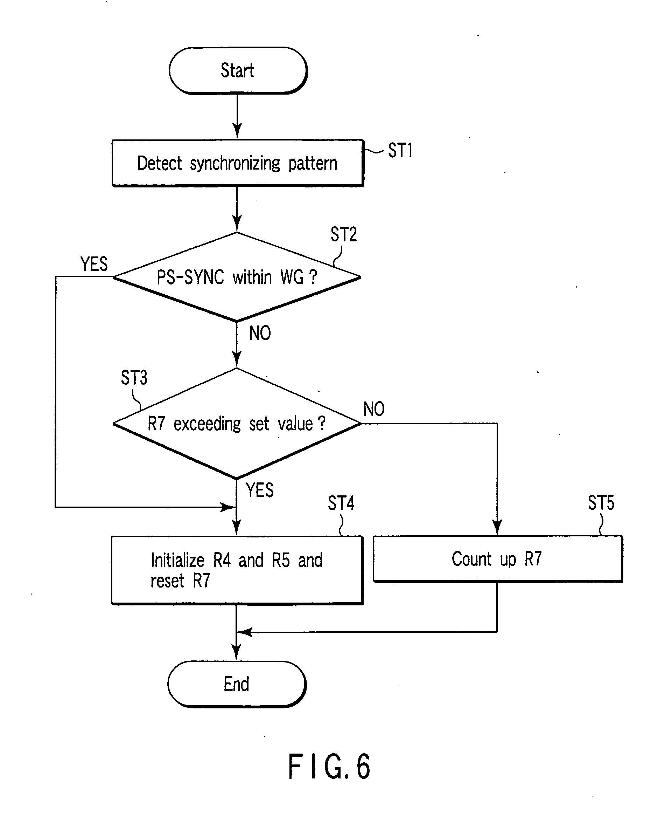

FIG. 6 is a flow chart schematically showing operations of the circuit in FIG. 5. The synchronizing signal is detected on the basis of its synchronizing pattern (step ST1). It is detected whether or not the synchronizing signal is within the gate pulse WG (step ST2). If the synchronizing signal is within the gate pulse WG, the frequency dividers R4 and R5 are initialized. Further, the false synchronizing signal detector R7 is reset (step ST4). If the synchronizing signal is out of the gate pulse WG, it is determined whether or not a count in the false synchronizing signal detector R7 has a set value (step ST3). If the count does not have the set value, it is incremented by one (step ST5). The procedure then shifts to a process of detecting the next synchronizing pattern. If the count has the set value, the procedure shifts to the process of forcedly initializing the frequency dividers R4 and R5 as previously described.

As described above, the period counter synchronizing system shown in FIG. 5 excludes the false synchronizing signal using the period of arrangement of the physical addresses, that is, the time correlation characteristic of arrival period of the WPA shown in the example in FIG. 4. However, if the false synchronizing signal NSYNC is generated at the same period, malfunction disadvantageously cannot be prevented.

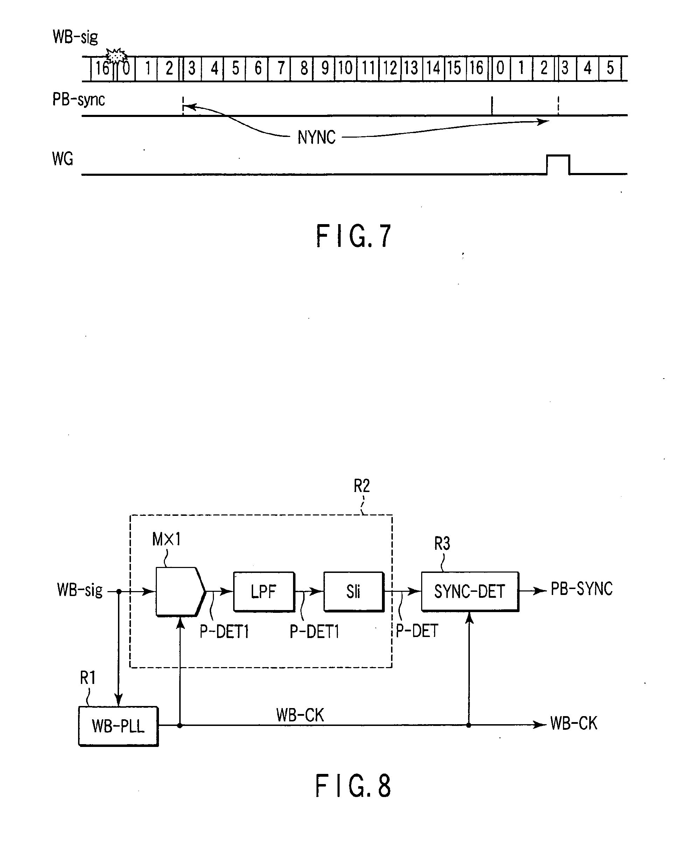

FIG. 7 shows an example of such a problem. FIG. 7 shows an example in which there is a defect in the correct synchronizing signal SYNC area when the physical addresses are reproduced under the condition of the consecutive transmission of WPAs. FIG. 7 shows a wobble signal (WB-signal), a synchronization detection signal PB-SYNC (in this case, a false synchronizing signal NSYNC), and a window gate pulse (WG).

If there is a defect in the correct synchronizing signal SYNC area, the period counter synchronizes with the next false synchronizing signal NSYNC. One period after synchronization has been achieved, the window gate pulse WG is generated. Then, a similar false synchronizing signal NSYNC is detected. Malfunction continues until this phenomenon is eliminated.

If recording track wobble signals from the recording medium such as those shown in FIG. 4 are modulated to embed physical addresses, complicated modulations or the like are difficult to utilize. Further, the false synchronizing signal NSYNC is likely to be generated even in the address data area owing to a decrease in S/N ratio. In FIG. 4, as a referential example, the synchronizing signal is a combination of an IPW (6WB), an NPW (4WB), and an IPW (6WB), and the address data uses a 4WB unit. It is thus unlikely to form a synchronizing signal pattern. However, erroneous detections are more likely to occur as described later in FIGS. 8, 9 and 10.

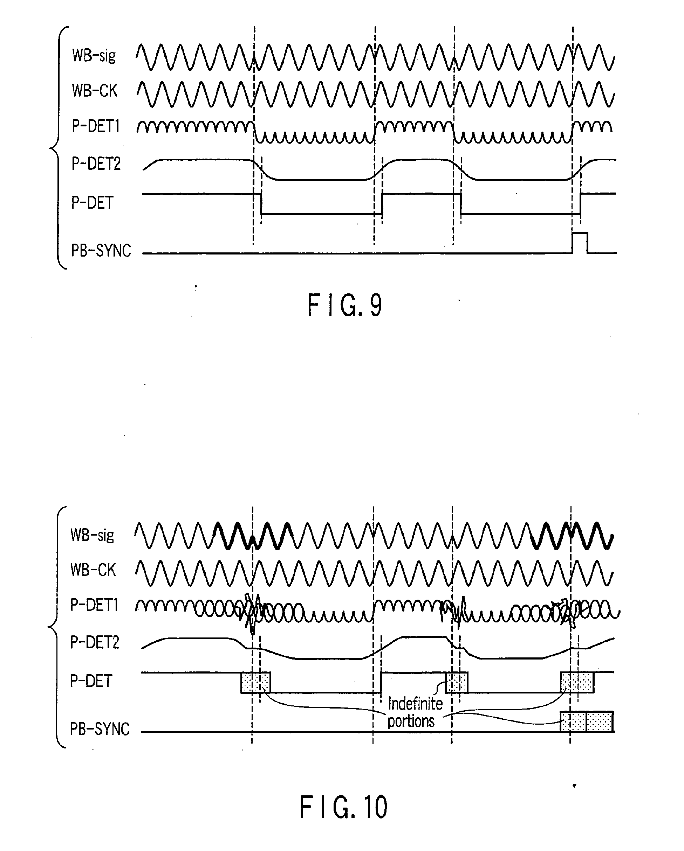

FIG. 8 shows a part composed of the phase detector R2 and synchronizing signal detector R3. FIG. 9 shows the waveforms of signals from the components. A wobble signal is modulated using physical address data. Then, a multiplier MX1 multiplies the modulated wobble signal by the output clock WB-CK, generated by the wobble phase synchronizing circuit R1. The multiplier MX1 provides a multiplication output signal P-DET1 as shown in FIG. 9. The signal P-DET1 is passed through a low pass filter LPF to generate an output signal P-DET2. A slicer Sli then slices the signal P-DET2 to output a binarized signal P-DET having a binary value. The length of "0" or "1" in the binarized signal P-DET is detected using the clock WB-CK. Thus, the WPA synchronization detection signal PB-SYNC, the data "0", or the data "1" is selectively demodulated.

FIG. 10 is a timing chart showing an example in which the S/N ratio of the wobble signal WB-signal decreases due to the crosstalk signal between adjacent tracks, a defect, or the like. In such a state, if the signal is degraded, the boundary between an NPW and an IPW cannot be reliably detected. Further, an inverted part of the binarized signal P-DET may take an unstable position. If the synchronizing signal is detected in such a situation, then in the address area, it is more likely to determine an IPW (4WB), an NPW (4WB), and an IPW (4WB) to be an IPW (6WB), an NPW (4WB), and an IPW (6WB) after binarization.

As described above, for a system that uses a simple modulation system and a simple synchronizing signal pattern to synchronize a period counter determining data extraction timings, it is important to make as much effort as possible to prevent erroneous detections and synchronizations.

Thus, the present invention makes further improvements. Specifically, a reliable synchronizing method and apparatus is provided by using the nature of the physical address structure shown in FIG. 4 as a referential example.

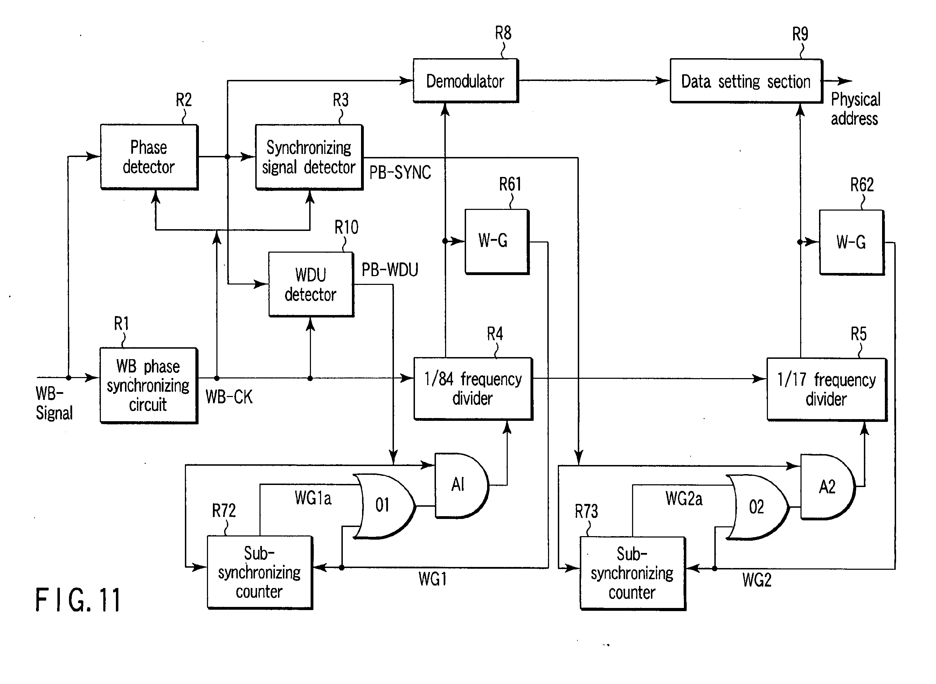

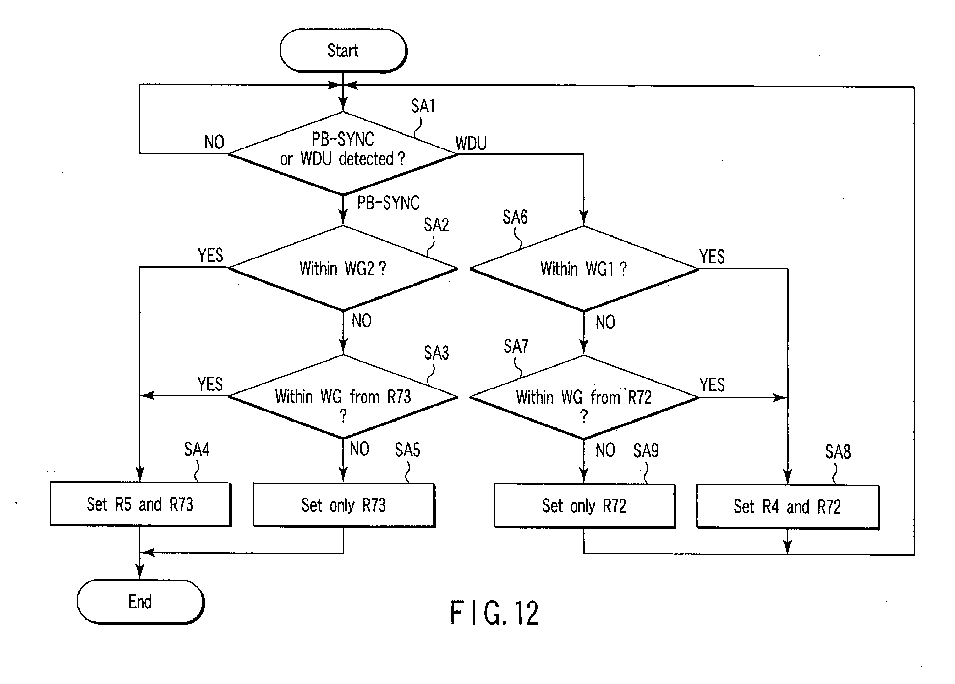

FIG. 11 is a diagram showing the configuration of a read timing control device according to a first improved example. FIG. 12 is a flow chart showing an example of operations of the read timing control device.

The same parts as those of the configuration shown in FIG. 5 are denoted by the same reference numerals. The wobble signal WB-signal read from the recording medium is sent to the wobble phase synchronizing circuit R1, which generates a clock. The wobble phase synchronizing circuit R1 generates the output clock WB-CK. This clock actually gradually increases the frequency of the wobble signal so that the signal has the channel bit clock frequency of a data recording signal for data recording. However, the clock divides the frequency of the signal again. That is, the clock is used for the wobble frequency or to read address data. Here, the output clock WB-CK from the wobble phase synchronizing circuit R1 is assumed to be used for the wobble frequency.

The wobble signal WB-signal is further sent to the phase detector R2 that distinguishes an NPW from an IPW. In this case, the output clock from the wobble phase synchronizing circuit R1 is utilized to determine whether the wobble signal WB-signal is an NPW or an IPW. A signal for a result of phase determination from the phase detector R2 is sent to the synchronizing signal detector R3 and the demodulator R8. With this configuration, the signal for the result of the phase determination is further sent to a wobble data unit (WDU) detector R10. On the basis of the data structure of the wobble data unit (WDU), the wobble data unit (WDU) detector R10 detects the arrival of the wobble data unit (step SA1). The wobble data unit synchronizing signal PB-WDU is inputted to a counter R72 and the AND circuit A1.

The counter R72 is used as a sub-period counter of the 1/84 frequency divider R4.

The counter R72 periodically outputs a gate signal. A 1/84 frequency divider R4 is reset if the wobble data unit synchronizing signal PB-WDU is obtained at the same time within a wobble data unit (WDU) window gate pulse WG1. The 1/84 frequency divider R4 is reset even if the wobble data unit synchronizing signal PB-WDU is present within the window gate pulse WG1a outputted by the counter R72 (steps SA2, SA3, and SA4). However, if the signal PB-WDU is not present within the pulse WG1 or is not present within the window gate pulse WG1a outputted by the counter R72, only the counter R72 is forcedly reset. That is, only the counter R72 is reset and the process waits for the next detection result (step SA9).

In this part, operations may be performed as shown in the example in FIG. 5. Specifically, if the signal PB-WDU is out of the period of the pulse WG1, the counter R72 continues counting. Once the count in the counter R72 reaches a predetermined value, the AND circuit A1 is controlled via an OR circuit O1 to forcedly initialize the 1/84 frequency divider R4 using the timing set by the signal PB-WDU.

The window gate pulse WG1 is created by a window gate circuit R61 using an output from the 1/84 frequency divider R4. The frequency division output from the 1/84 frequency divider R4 is further inputted to a 1/27 frequency divider R5, thus constituting a period counter circuit.

In this case, the synchronizing signal detector R3 detects the synchronizing signal section (SYNC), described in FIG. 4, and outputs the WPA synchronization detection signal PB-SYNC (step SA1). The WPA synchronization detection signal PB-SYNC is inputted to the counter R72 and an AND circuit A2. A counter R73 is reset when the WPA synchronization detection signal PB-SYNC and a window gate pulse WG2 are obtained at the same time (steps SA6, SA7, and SA8). However, when the signal PB-SYNC does not synchronize with the pulse WG2, counting continues. Once the count in the counter R73 reaches a predetermined value, the AND circuit A2 is controlled via an OR circuit 02 to forcedly initialize the 1/17 frequency divider R5 using the timing set by the signal PB-WDU (step SA9). The window gate pulse WG2 is created by the window gate circuit R62 using an output from the 1/17 frequency divider R5.

This embodiment utilizes a pattern in which the WDU (transmission unit) shown in FIG. 4 is configured so that at least only the first 16 wobbles are modulated so as to have certain contents, while the remaining wobbles have an NPW phase, with the first 4 wobbles defined as an IPW. Utilizing this pattern, a wobble data unit detector R10 detects a WDU division point. On the basis of the result of the detection, the 1/84 frequency divider R4 is initialized. The synchronizing signal detector R3 initializes only the 1/17 frequency divider R5. That is, the 1/84 frequency divider R4 is initialized for WDU synchronization, while the 1/17 frequency divider R5 is initialized for segment synchronization.

In this case, it is assumed that initialization of the 1/17 frequency divider R5 is started when about half the synchronizing signal of the WDU has been loaded into the data setting section R9. Then, even if much jitter occurs in the detection result PB-SYNC from the synchronizing signal detector R3, the initialization and the count-up in the 1/17 frequency divider R5 occur at different points in time. Accordingly, the position of the signal PB-SYNC need not be precise with respect to the clock WB-CK.

Further, the wobble data unit detector R10 generates a large number of detection results. Consequently, it is unlikely to make the detection of the period of the whole WPA unreliable. Moreover, the method of initializing the 1/84 frequency divider R4 comprises correcting a detected phase difference on the basis of the initialize timing and the contents of the counter of the 1/84 frequency divider R4 rather than forcedly presetting a general specified value. This prevents significantly erroneous settings even if the timing for the detection results accompanies jitter. Therefore, the system becomes more reliable.

As described above, in the present example, even if the unit detection signal PB-WDU or the block synchronization detection signal PB-SYNC is not present within from the period of the window gate signal WG1 or WG2, respectively, generated by the output from the N or M period counter R4 or R5, respectively, provided that the signal PB-WDU or PB-SYNC is found within the window gate signal WG1a or WG2a, respectively, the corresponding N or M period counter R4 or R5 is initialized. If the unit detection signal PB-WDU or the block synchronization detection signal PB-SYNC is not present within any periods of the window gate signals WG1, WG2, WG1a, and WG2a, only the corresponding sub-period counter R72 or R73 is initialized. The process then waits for the next detection result.

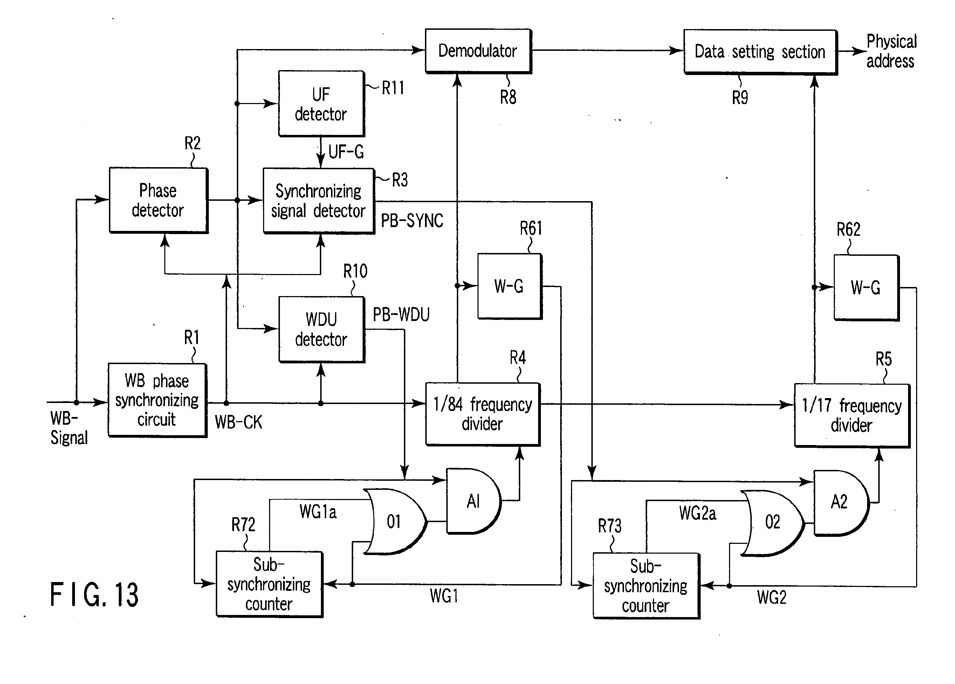

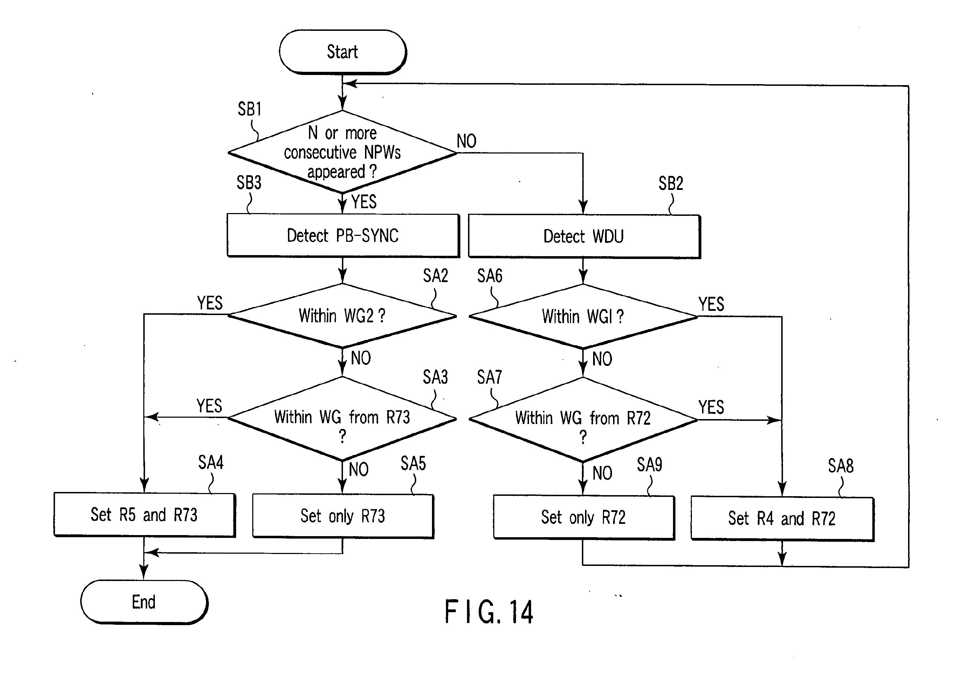

FIG. 13 shows another embodiment. A unity field (UF) detector R11 is added to the configuration shown in FIG. 11. FIG. 14 is a flow chart showing an example of operations of this embodiment. This embodiment focuses on the fact that in the WPA composed of the plurality of wobble data units WDU, shown in the example in FIG. 4, the last WDU is not modulated and is used as a unity field. Another focus is on the presence of the WPA synchronization detection signal PB-SYNC during a specific period after the detection of an NPW the amount of which exceeds the amount of wobbles in one WDU.

By way of example, when the unity field detector R11 detects an NPW corresponding to at least 150 wobbles, a gate signal UF-G is generated for a specific period. Then, only during that period, the synchronizing signal detector R3 is operated, or the detection result PB-SYNC is outputted only during the generation of the gate signal UF-G even though the synchronizing signal detector R3 is operated (step SB1 and SB2). The other operations are the same as those in the above embodiment. Accordingly, the parts of the flow chart in FIG. 14 which correspond to the flow chart in FIG. 12 are denoted by the same reference numerals as those in FIG. 12.

This configuration accepts the WPA synchronization detection signal PB-SYNC only when the gate signal UF-G is obtained. It is thus possible to prevent the false synchronizing signal from causing initialization. Specifically, it is impossible that the false synchronization shown in FIG. 7 occurs. This makes the system much more reliable. The other parts are the same as those of the circuit shown in FIG. 11. Accordingly, their description is omitted.

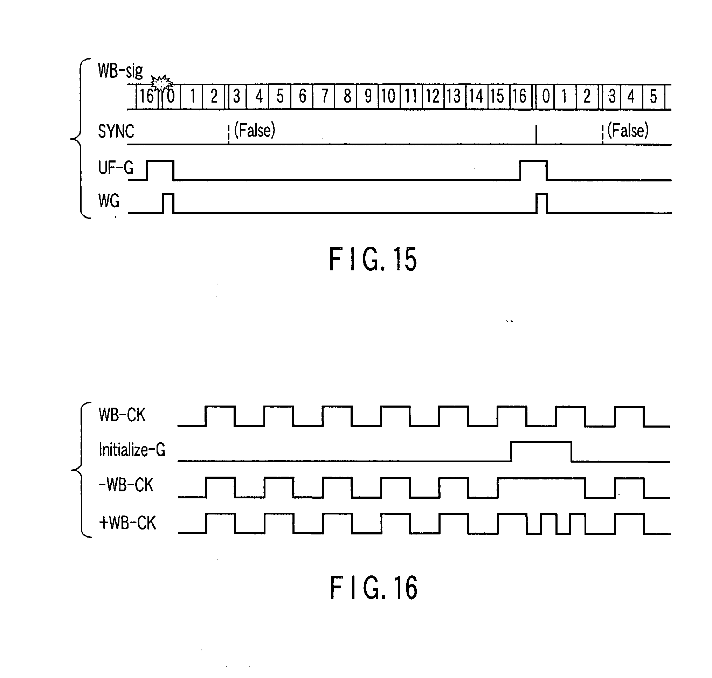

FIG. 15 shows the relationship among the wobble signal WB-signal, the synchronizing signal SYNC, the unity field detection signal UF-G, and the gate signal WG2 during the operation of the above circuit. Thus, even if there is a defect in a synchronizing signal recording section, a stable synchronization can be maintained.

The method of initializing the frequency divider R4 may comprise correcting the phase of the counter, the frequency divider R4, by increasing or reducing the number of clocks WB-CK in accordance with the initialize timing and a phase difference based on the contents of the counter, rather than forcedly presetting a general specified value.

FIG. 16 shows a clock correcting operation performed in the frequency divider R4. When an initialize signal (Initialize-G) is generated, the clock WB-CK is corrected so as to increment or decrement by one, on the basis of the contents of the counter of the frequency divider R4. The figure shows the waveform (-WB-CK) of the decremented clock and the waveform (+WB-CK) of the incremented clock.

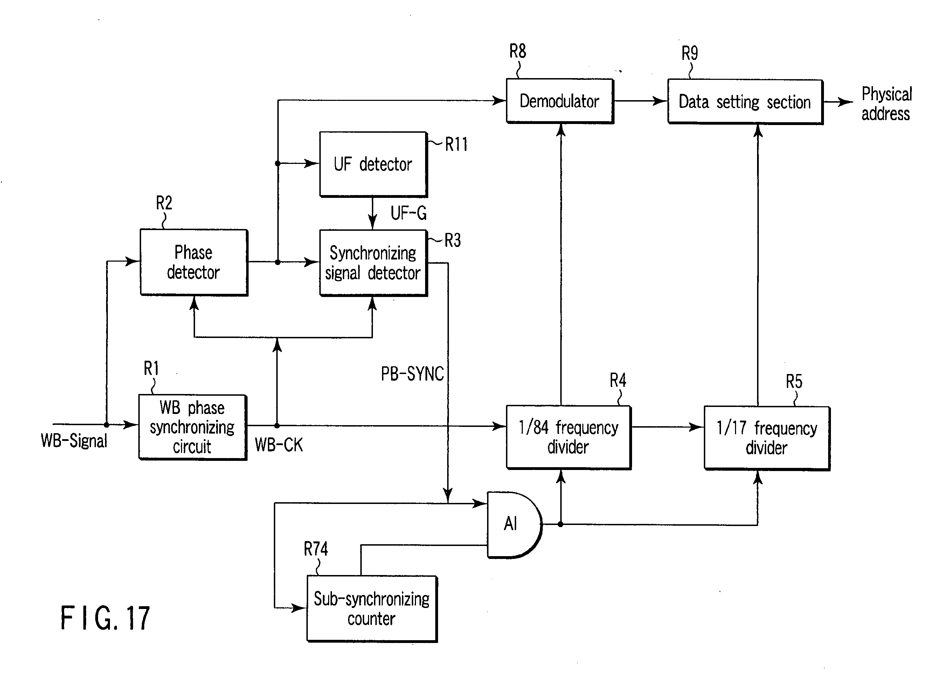

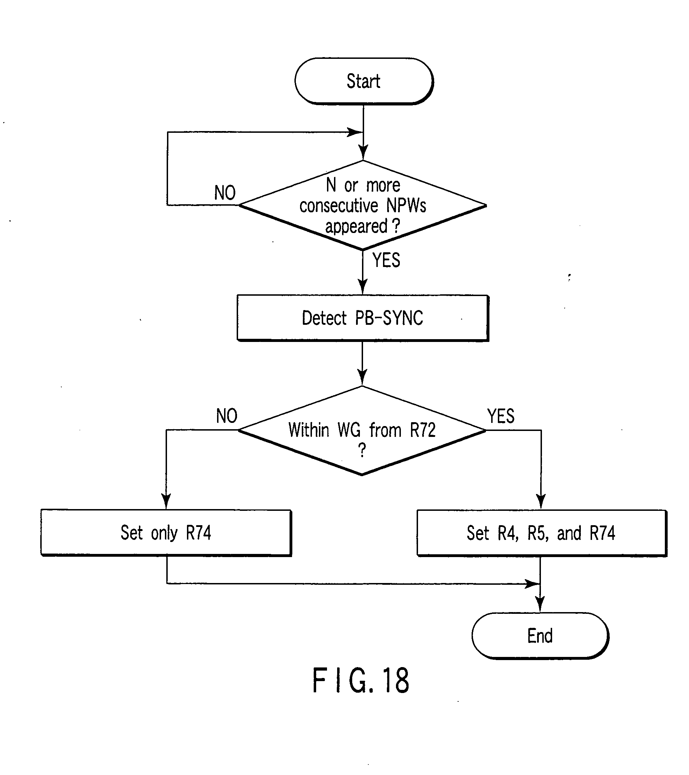

FIG. 17 shows another embodiment. FIG. 18 is a flow chart showing an example of operations of this embodiment. This embodiment has a function by which the unity field detector R11 is controlled to restrict the synchronizing signal detector R3. It thus initializes the 1/84 frequency divider R4 and 1/27 frequency divider R5, constituting the period counter circuit, using only the WPA synchronization detection signal PB-SYNC (having passed through the AND circuit A1). This configuration can also adequately prevent the false synchronizing signal from causing initialization.

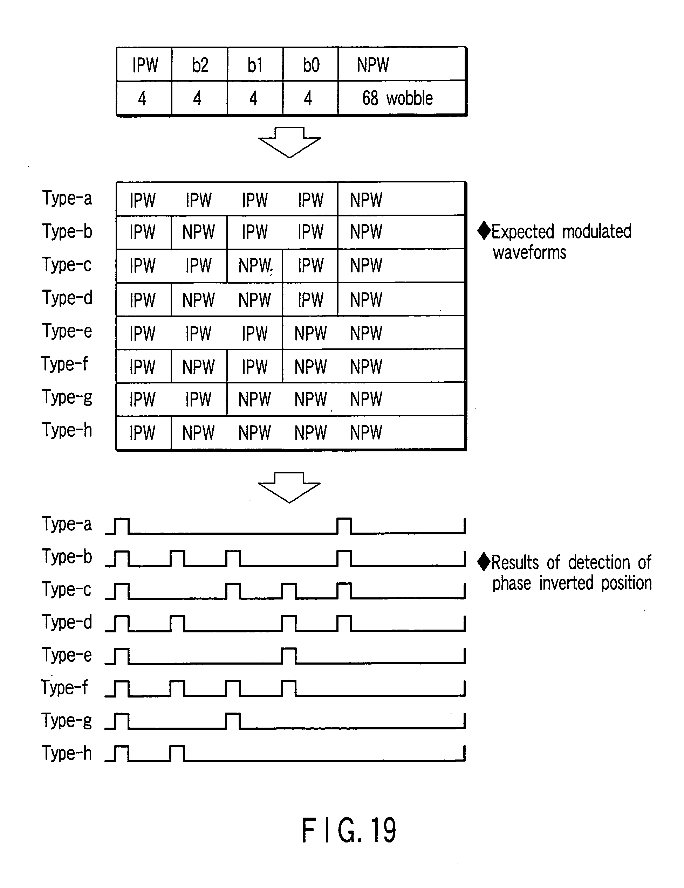

FIG. 19 is a diagram showing an approach to improving the reliability of detection of a WDU division point. The WDU detector R10, shown in FIGS. 11 and 13, utilizes the characteristics of the data structure of WDUs in the address field, shown in FIG. 4. Specifically, the WDU division point is detected by detecting that the preceding NPW (68 wobbles) continues for a specific period to detect the first IPW of the WDU to be detected. However, the leading IPW may be erroneously determined owing to a defect or the like. Accordingly, the detection of the WDU division point is made more reliable by utilizing the nature that if the data succeeding the leading IPW has its phase inverted, it is positioned at a distance equal to 4 wobbles. FIG. 19 illustrates the types of waveforms assumed as the configuration of WDUs in the address field, as (Type-a) to (Type-h). The figure also shows phase inversion point patterns corresponding to the respective types. Detecting the phase inversion point enables the WDU division point to be much more reliably detected. With this detection system, the frequency divider R4 is initialized near the 20-th wobble because the detection result appears after 16 wobbles have been obtained. Thus, the initialize point is not within the data area, thus advantageously hindering variations attributed to the initialization.

As described above, in one aspect of the present invention, a carrier of N cycles (84 wobbles) is composed of transmission units (=WDUs), and a transmission block (=WPA) is composed of M (=17) sets of transmission units. The transmission units constituting the transmission block include a transmission block synchronizing signal (first WDU) and distributed control data (the data in the address field). The synchronizing signal and control data are embedded by subjecting the waveforms of the wobbles to the data modulation. The present invention provides a data reproducing system used if transmission blocks (=WPAs) in such a form are consecutively transmitted.

To generate timing signals for separating and reading data from the data modulated portion, main period counter means is constructed by connecting an N period counter (1/84 frequency divider) and an M period counter (1/17 frequency divider) together. Transmission unit detecting means (WDU detector R10) detects a transmission unit division point between a non-modulated area in the latter half of the transmission unit (=WDU) and the modulated leading part of the next transmission unit (=WDU). Thus, a unit detection signal (PB-WDU) is obtained. Transmission block synchronization detecting means (synchronization signal detector R3) detects a synchronizing signal from the transmission unit (first WDU) located at the leading end of the transmission block modulated by the block synchronizing signal. The transmission block synchronization detecting means then outputs a block synchronization detection signal (PB-SYNC).

Then, initialize means (O1, A1, 02, and A2) initializes the N period counter (1/84 frequency divider) to a set value using the unit detection signal (PB-WDU), detected by the transmission unit detecting means (WDU detector R10). The initialize means (O1, A1, 02, and A2) also initializes the M period counter (1/17 frequency divider) to a set value using the block synchronization detection signal (PB-SYNC), detected by the transmission block synchronization detecting means (synchronizing signal detector R3). Although not shown, means for generating timing signals used by the main period counter means, composed of the N period counter and the M period counter, to read modulated data contained in the transmission units.

The present invention is effective in fields in which, for example, a carrier is used to generate a system clock for a system that transmits main information and for a system that records main information. If control data or the like is embedded in the carrier (the carrier is modulated), the embedded modulated area constitutes a part of the carrier. Specifically, the data is distributively embedded in the carrier. To obtain data reading timings, the separate counters are used to provide a period for the transmission units and for the transmission blocks. Period synchronization is separately executed on these counters. This prevents the apparatus from being falsely synchronized. In particular, since a non-modulated area of the transmission unit is larger than its modulated area, a transmission unit division point is detected by detecting the non-modulated area of the preceding transmission unit and then the modulated area of the next transmission unit. The introduction of this system enables the transmission unit division point to be stably detected.

According to another aspect of the present invention, the transmission unit detecting means detects the transmission unit division point by detecting the non-modulated area in the latter half of the transmission unit and the modulated area in the modulated leading part of the next transmission unit. The transmission unit detecting means thus obtains a unit detection signal.

According to another aspect of the present invention, the block synchronization detecting means detects transmission units none of which are modulated (unity field: FIGS. 13 and 17), to detect the block synchronization detection signal from the next transmission unit. Then, the block synchronization detecting means considers this block synchronization detection signal to be valid.

According to an aspect of the present invention, the unit detection signal detected by the transmission unit detecting means is used to initialize the N period counter to a set value. The block synchronization detection signal detected by the transmission block synchronization detecting means is used to initialize the M period counter to a set value. In this case, the initialization is carried out only when the unit detection signal and the block synchronization detection signal are detected within window gate signals generated by outputs from the N and M period counters, respectively.

Another aspect of the present invention further has a first sub-period counter (R72) corresponding to the N period counter and a second sub-period counter (R73) corresponding to the M period counter. Even if the unit detection signal or the block synchronization detection signal is not present within the window gate signal generated by the output from the N or M period counter, respectively, provided that the signal is found in a window gate generated by the corresponding sub-period counter, the corresponding N or M period counter is initialized. If the signal is not present within any window gates, the corresponding sub-period counter is initialized. The process then waits for the next detection result. If the correct synchronizing signal is not present within the window gate of the period counter, synchronization is permanently not achieved. Accordingly, the sub-period counters are installed so that if a detection result is generated at a distance within one period, the corresponding period counter is synchronized. Since non-consecutive detection signals are likely to be false, this aspect can deal with the correct synchronization at any time while preventing erroneous synchronizations.

Another aspect of the present invention further has a first sub-counter corresponding to the N period counter and a second sub-counter corresponding to the M period counter. Even if the unit detection signal or the block synchronization detection signal is not present within the window gate signal generated by the output from the N or M period counter, respectively, the count in the corresponding sub-counter is controlled. Then, once the count reaches a predetermined value, the N or M period counter is forcedly initialized. This is also within the scope of the present invention. This configuration is characterized in that the period counter is composed of the N period counter and M period counter, which are connected together, and in that the N and M period counters separately execute initialization.

According to another aspect of the present invention, if the initialize means initializes the N and M period counters, predetermined values are set in these counters.

According to another aspect of the present invention, if the initialize means initializes the N and M period counters, the N and M period counters are not preset to predetermined values, and the count in the N period counter is controlled to be closer to a predetermined value as follows. If the count in the N period counter at a point in time for initialization is larger than the predetermined value, a counter input clock is decremented by one clock. On the other hand, if the count is smaller than the predetermined value, the input clock is incremented by one clock for supply. This is also within the scope of the present invention. The N period counter synchronizes the transmission units constituting the whole block. Accordingly, the timing for detection of a transmission unit may vary depending on the grade of the signal. However, since the N period is short, a large number of detections are executed and the magnitude of variation in detection timing is thus small. This eliminates the need for forced initialization to a specified value. Even an erroneous initialization does not affect the reading of control data. Therefore, the whole system is more reliable.

The carrier is composed of wobble signals from recording tracks in a recording medium. The control data is composed of physical address information. In a configuration used to generate timing clocks for data recording signals on the basis of wobbling recording tracks in a recording medium such as an optical disk, if physical addresses are provided by wobble modulation, timings for reading the physical addresses are controlled by using a counter for an address recording arrangement period. In this case, the capability of synchronizing the period counter is important. However, since it is essential to record or reproduce data in or from the recording tracks, the level of modulation cannot be significantly increased if the physical addresses are subjected to a track wobble modulation. As a result, a high S/N ratio cannot be obtained. Consequently, for timings for detecting the synchronizing signal, the detection may often be erroneous and the detecting timing may often vary. The above configuration enables reliable synchronizations even with such a defect.

Of course, the present invention can be employed not only to reproduce information from a recording medium but also for a transmission system that receives signals for the above transmission units and transmission blocks each composed of the transmission units.

The present invention is not limited to the above embodiments. In implementation, the components of the embodiments may be varied without departing from the spirit of the invention. Further, various inventions can be formed by properly combining a plurality of the components disclosed in the above embodiments. For example, some of all the components shown in the embodiments may be omitted. Moreover, components of the different embodiments may be properly combined together.

## Claims

1. A synchronizing method for demodulating control data from data modulated waves in a plurality of transmission blocks (WPA) each formed of a plurality of transmission units (WDU) containing the data modulated waves,
wherein each of the transmission units (WDU) contains a carrier of N cycles, and in a leading part of the unit, the carrier is a fixed modulated wave, in a trailing part of the unit, the carrier is a non-modulated wave, and between the unit leading part and the unit trailing part, the carrier is the data modulated wave,
wherein each of the transmission blocks (WPA) contains M transmission units (WDUs), the transmission unit at the leading end of the transmission block is defined as a synchronizing section, a predetermined number of transmission units (WDUs) in a trailing part of the block are all defined as a unity field containing the non-modulated wave, and a plurality of transmission units (WDUs) between the block trailing part and the block leading end are defined as an address field containing the data modulated wave,
the synchronizing method **characterized by** comprising steps of:
detecting a pattern of the fixed modulated wave in the unit leading part and the non-modulated wave in the unit trailing part and obtaining a unit detection signal (PB-WDU) indicative of a division point between a plurality of the transmission units (WDUs) on the basis of the pattern;
obtaining a block synchronization detection signal (PB-SYNC) from the transmission unit at the block leading end;
initializing an N period counter (R4) to a first set value by using the unit detection signal (PS-WDU), the N period counter (R4) counting a clock synchronizing with the carrier;
initializing an M period counter (R5) to a second set value by using the block synchronization detection signal (PB-SYNC), the M period counter (R5) dividing a frequency of an output from the N period counter; and
using the count outputs from the N period counter and M period counter to obtain a demodulated output of the modulated wave and to extract data from the demodulated output.

2. The synchronizing method according to claim 1, **characterized in that** the unit detection signal is detected from a detection pattern of the non-modulated wave in the unit trailing part and the fixed modulated wave in the leading part.

3. The synchronizing method according to claim 1, the block synchronization detection signal being considered to be valid under the conditions of that the transmission unit of the unity field all of which contain the non-modulated wave are detected, and the block synchronization detection signal is obtained from a transmission unit succeeding the transmission unit.

4. The synchronizing method according to claim 1, **characterized in that** the initialization of the N period counter (R4) and the M period counter (RS) is carried out only when the unit detection signal (PS-WDU) and the block synchronization detection signal (PB-SYNC) are detected within window gate signals (WG1 and WG2) generated by outputs from the N and M period counters (R4 and R5), respectively.

5. The synchronizing method according to claim 1, **characterized in that** a first sub-period counter (R72) corresponding to the N period counter (R4) and a second sub-period counter (R73) corresponding to the M period counter (R5) are used, and
even if the unit detection signal (PB-WDU) or the block synchronization detection signal (PB-SYNC) is not present within the period of the window gate signal (WG1 or WG2) generated by the output from the N or M period counter, respectively,
provided that if the signal is found in the period of window gate (WG1a, WG2a) generated by the corresponding sub-period counter (R72 or R73), the corresponding N or M period counter is initialized, and if the signal is not present within any window gate signal periods, only the corresponding sub-period counter is initialized, and the method then waits for the next detection result.

6. The synchronizing method according to claim 1, **characterized in that** a first sub-counter (R72) corresponding to the N period counter (R4) and a second sub-counter (R73) corresponding to the M period counter (R5) are used, and,
even if the unit detection signal (PB-WDU) or the block synchronization detection signal (PB-SYNC) is not present within the period of the window gate signal (WG1 or WG2) generated by the output from the N or M period counter, respectively, a count in a corresponding sub-period counter (R72 or R73) is controlled, and once the count reaches a predetermined value, the N or M period counter (R4 or R5) is forcedly initialized.

7. The synchronizing method according to claim 1, **characterized in that** if the N and M period counters (R4) is initialized, the count in the N period counter (R4) is controlled to be closer to a predetermined value by way if the count in the N period counter (R4) at a point in time for initialization is larger than the predetermined value, a counter input clock is decremented by one clock, if the count is smaller than the predetermined value, the input clock is incremented by one clock for supply.

8. The synchronizing method according to claim 1, **characterized in that** the carrier is wobble signals from recording tracks in a recording medium, and the control data is physical address information.

9. A synchronizing apparatus for demodulating control data from data modulated waves in a plurality of transmission blocks (WPA) each formed of a plurality of transmission units (WDU) containing the data modulated waves,
wherein each of the transmission units (WDU) contains a carrier of N cycles, and in a leading part of the unit, the carrier is a fixed modulated wave, and in a trailing part of the unit, the carrier is a non-modulated wave, and between the unit leading part and the unit trailing part, the carrier is the data modulated wave,
wherein each of the transmission blocks (WPA) contains M of the transmission units, the transmission unit at the leading end of the transmission block is defined as a synchronizing section, a predetermined number of transmission units in a trailing part of the block are all defined as a unity field containing the non-modulated wave, and a plurality of transmission units between the block trailing part and the block leading end are defined as an address field containing the data modulated wave,
the synchronizing apparatus **characterized by** comprising:
means (R10) detecting a pattern of the fixed modulated wave in the unit leading part and the non-modulated wave in the unit trailing part and obtaining a unit detection signal (PB-WDU) indicative of a division point between a plurality of the transmission units (WDU) on the basis of the pattern;
means (R3) for obtaining a block synchronization detection signal (PB-SYNC) from the transmission unit at the block leading end;
means (O1 and A1) for using the unit detection signal to initialize an N period counter (R4) to a first set value, the N period counter (R4) counting a clock synchronizing with the carrier;
means (O2 and A2) using the block synchronization detection signal to initialize an M period counter (R5) to a second set value, the M period counter (R5) dividing a frequency of an output from the N period counter; and
means (R8 and R9) for using the count outputs from the N period counter and M period counter to obtain a demodulated output for the carrier and to extract data from the demodulated output.

10. The synchronizing apparatus according to claim 9, **characterized in that** if the unit detection signal (PS-WDU) is used to initialize the N period counter (R4) to the first set.value and the block synchronization detection signal (PB-SYNC) is used to initialize the M period counter (R5) to the second set value,
the initialization is carried out only when the unit detection signal (PS-WDU) and the block synchronization detection signal (PB-SYNC) are detected within window gate signals (WG1 and WG2) generated by outputs from the N and M period counters (R4 and R5), respectively.

11. The synchronizing apparatus for demodulating control data from data modulated waves in a plurality of transmission blocks(WPA) each formed of a plurality of transmission units(WDU) containing the data modulated waves,
wherein each of the transmission units(WDU) contains a carrier of N cycles, and in a leading part of the unit, the carrier is a fix modulated wave, and in a trailing part of the unit, the carrier is a non-modulated wave, and between the unit leading part and the unit trailing part, the carrier is the data modulated wave,
wherein each of the transmission blocks (WPA) contains M of the transmission units(WDUs), the transmission unit at the leading end of the transmission blocks is defined as a synchronizing section, a predetermined number of transmission units (WDUs) in a trailing part of the bock are all defined as a unity field containing the non-modulated wave, and a plurality of transmission units(WDUs) between the block trailing part and the block leading end are defined as an address field containing the data modulated wave,
the synchronizing apparatus **characterized by** comprising:
a first detector (R10) detecting a pattern of the fixed modulated wave in the unit leading part and the non-modulated wave in the unit trailing part and obtaining a unit detection signal (PB_WDU) indicative of a division point between a plurality of the transmission units(WDU) on the basis of the pattern;
a second detector(R4) obtaining a block synchronization detection signal (PB-SYNC) from the transmission unit at the block leading end;
a first circuit (O1, A1) using the unit detection signal to initialize an N period counter (R4) to a first set value, the N period counter (R4) counting a clock synchronizing with the carrier;
a second circuit (O2, A2) using the block synchronizing detection signal to initialize an M period counter (R5) to a second set value ,the M period counter (R5) dividing a frequency of an output from the N period counter; and
data processor (R8, R9) using the count output from the N period counter and M period counter to obtain a demodulated output for the carrier an to extract data from the demodulated output.

12. The synchronizing'apparatus according to claim 11, **characterized in that** if the unit detection signal (PS-WDU) is used to initialize the N period counter (R4) to a first set value and the block synchronization detection signal (PB-SYNC) is used to initialize the M period counter (R5) to a second set value,
the initialization is carried out only when the unit detection signal (PS-WDU) and the block synchronization detection signal (PB-SYNC) are detected within window gate signals (WG1 and WG2) generated by output from the N and M period counters (R4 and R5), respectively.
